# EUROPÄISCHE PATENTSCHRIFT

(11) **EP 1 764 184 B1**
(45) Veröffentlichungstag und Bekanntmachung des Hinweises auf die Patenterteilung: **02.04.2008**
(21) Anmeldenummer: 06019139.2
(22) Anmeldetag: 13.09.2006
(51) Int. Cl.: B23Q 11/08

(54) **Schutzabdeckung**
Protection device
Dispositif de protection

(30) Priorität: 14.09.2005 DE 202005014596 U
(43) Veröffentlichungstag der Anmeldung: 21.03.2007
(73) Patentinhaber: Arno Arnold GmbH, D-63179 Obertshausen (DE)
(72) Erfinder: Mang, Wolf, 63179 Obertshausen (DE)
(74) Vertreter: Böck, Bernhard

(56) Entgegenhaltungen:
- DE-U1- 20 107 092
- DE-U1- 20 207 343
- DE-U1- 20 220 812

## Beschreibung

Die Erfindung betrifft eine Schutzabdeckung mit mindestens zwei in Bewegungsrichtung der Schutzabdeckung hintereinander angeordneten Schutzabdeckungselementen nach dem Oberbegriff des Anspruchs 1, wie z.B. aus der DE-U-20 207 343 bekannt.

Schutzabdeckungen der hier in Rede stehenden Art dienen insbesondere, jedoch keineswegs ausschließlich, zur Abdeckung von beweglichen Maschinenteilen oder dergleichen.

Es ist bekannt, zur Abdeckung derart beweglicher Maschinenteile einen Faltenbalg vorzusehen. Um eine Zerstörung des Faltenbalges beispielsweise durch Partikel wie Metallspäne oder dergleichen, wie sie bei der spanenden Bearbeitung von Metallen, Kunststoff oder Holz anfallen, zu verhindern, ist es ebenfalls bekannt, in den gefährdeten Bereichen den Faltenbalg durch Metalllamellen abzudecken, wobei an den Stützrahmen des Faltenbalges jeweils eine Metalllamelle derart angeordnet ist, dass sich die Lamellen benachbarter Stützrahmen derart überdecken, dass bei der bestimmungsgemäßen Bewegung des Faltenbalges die jeweils benachbarten Lamellen teleskopartig unter Bildung einer im wesentlichen geschlossen Abdeckung aufeinander gleiten.

Insbesondere wenn die Schutzabdeckung einen L- oder U-förmigen oder kastenartig geschlossenen Querschnitt und damit abgewinkelte Stützrahmen und ebenso abgewinkelte Lamellen aufweist, ergibt sich insbesondere bei einem weitgehenden Zusammenfahren des Faltenbalges eine paketartig übereinander gestapelte Anordnung von mehreren Lamellen. Dies führt dazu, dass aufgrund der räumlichen Bewegung der Metalllamellen Spannungen vom bereich der Abwinklung in die linearen Bereiche links und rechts der Abwinklung induziert werden, die ein Klemmen der Lamellen und damit eine Bewegungsbehinderung des Faltenbalges bzw. der Schutzabdeckung insgesamt bewirken.

Zur Verminderung dieses Problems ist es beispielsweise aus der DE 201 07 092 U1 bekannt, die Metalllamellen dreiteilig auszubilden, nämlich mit jeweils einem Lamellenabschnitt auf beiden Seiten der Abwinklung und einem dritten zusätzlichen Lamellenabschnitt im Bereich der Abwinklung, der im abgewinkelten Bereich am Stützrahmen des Faltenbalges starr befestigt ist und mit zwei flügelartig angeordneten abgewinkelten Laschen die jeweils benachbarten Lamellen hintergreift. Damit werden zwar die Bewegungen der Lamellenabschnitte entkoppelt, allerdings ist der Montage- und Herstellungsaufwand aufgrund der Vielzahl an herzustellenden und zu montierenden Lamellenelemente beträchtlich. Zudem sind bei dieser Gestaltung keine abgerundeten Abwinklungsbereich realisierbar.

Ausgehend von diesem Stand der Technik ist es die Aufgabe der vorliegenden Erfindung, eine Schutzabdeckung zu schaffen, die bei sicherer Abdeckung einfach und kostengünstig herstellbar und montierbar ist und bei im wesentlichen freier Gestaltung des abgewinkelten Bereiches ein ungehindertes Zusammenschieben der Schutzabdeckung ohne die Gefahr des Verklemmens erlaubt.

Diese Aufgabe wird durch eine Schutzabdeckung nach der Lehre des Anspruchs 1 gelöst.

Vorteilhafte Ausgestaltungen der Erfindung sind Gegenstand der Unteransprüche.

Die erfindungsgemäße Schutzabdeckung weist in zunächst bekannter Weise mindestens zwei in Bewegungsrichtung der Schutzabdeckung hintereinander angeordnete Schutzabdeckungselemente auf, die jeweils wiederum mindestens ein Rahmenelement aufweisen, das mit mindestens zwei gegeneinander abgewinkelten Rahmenabschnitten versehen ist. Dabei ist an jedem Rahmenabschnitt mindestens ein Lamellenelement derart angeordnet, dass die Lamellenelemente unmittelbar hintereinander angeordneter Rahmenelemente unter Bildung einer im wesentlich geschlossenen Abdeckung teleskopartig aufeinander gleitend einander übergreifen. Jeder Rahmenabschnitt jedes Rahmenelementes ist dabei mit einem separaten Lamellenelement versehen.

Gemäß der Erfindung weist jeweils ein erstes Lamellenelement an einem ersten Rahmenabschnitt eine den abgewinkelten Bereich zum zweiten Rahmenabschnitt des gleichen Rahmenelementes übergreifende kurvenförmig gebogene Lasche auf. Dabei hintergreift die Lasche ein zweites Lamellenelement am zweiten Rahmenabschnitt derart, dass die Lasche des ersten Lamellenelementes bei der Bewegung der Schutzabdeckung relativ zum zweiten Lamellenelement bewegbar ist.

Es ist also mit anderen Worten die wesentliche Idee der vorliegenden Erfindung, ein Lamellenelement, nämlich das zweite Lamellenelement, im wesentlichen fest an seinem Rahmenabschnitt anzuordnen, während das zweite Lamellenelement im Bereich seines einen Endes ebenfalls fest am ersten Rahmenabschnitt angeordnet wird, mit seinem freien Ende jedoch in Bereich des zweiten Lamellenelementes eingreift und dort gegenüber diesem im wesentlichen frei beweglich ist. Damit entsteht ein Freiheitsgrad in der Bewegung zwischen den beiden Lamellenelementen, der den Aufbau unerwünschter Spannungen verhindert oder doch zumindest signifikant reduziert.

Nach einem bevorzugten Ausführungsbeispiel der Erfindung sind die Rahmenelemente Stützrahmen eines Faltenbalges, zwischen denen die gefalteten Bereiche des Faltenbalges angeordnet sind. Die Schutzabdeckung gemäß der Erfindung besteht bei diesem Ausführungsbeispiel also aus der Kombination eines herkömmlichen Faltenbalges mit einer Lamellenabdeckung, die im wesentlichen zum Schutz des Faltenbalges dient.

Vorzugsweise bildet dabei der Faltenbalg einen im wesentlichen geschlossenen Balgkörper. Geschlossen bedeutet dabei nicht ein im Querschnitt kastenartig geschlossenes Profil, sondern vielmehr eine geschlossene, das heißt im wesentlichen undurchlässige Ausführung des Faltenbalges.

Nach einer weiteren Ausgestaltung kann der Faltenbalg zumindest bereichsweise mit Ausnehmungen und/oder Öffnungen versehen sein. So kann der Faltenbalg beispielsweise einfach oder mehrfach über seine gesamte Länge geschlitzt und damit in separate Faltenbalgelemente aufgelöst sein. Dabei dient der Faltenbalg nicht mehr primär der Abdichtung, sondern der Verbindung der Rahmenelemente.

Entsprechend einem weiteren besonders bevorzugten Ausführungsbeispiel sind die Rahmenelemente durch zumindest zugkraftübertragene Verbindungselemente, insbesondere Zugbänder, Federelemente oder dergleichen miteinander verbunden. Dieser Gestaltung liegt die Erkenntnis zugrunde, dass bei einer ausreichend abdichtenden bzw. schützenden Wirkung der Lamellenelemente auf einen Faltenbalg gänzlich verzichtet werden kann, wobei jedoch zur Sicherstellung einer bestimmungsgemäßen Bewegung der Schutzabdeckung die Rahmenelemente und damit die Schutzabdeckungselemente zumindest zugkraftübertragend verbunden werden müssen.

Das Material der Lamellenelemente ist grundsätzlich beliebig. Vorzugsweise jedoch bestehen das erste und/oder das zweite Lamellenelement aus Kunststoff oder Metall, insbesondere aus Federstahl. Dabei wird zum einen eine gegen Zerstörung sichere Abdeckung erzielt und zum anderen kann aufgrund der elastischen Eigenschaften des Lamellenmaterials sowohl ein federelastisches Anpressen aufeinander gleitender Lamellenelemente und damit eine hohe Dichtwirkung als auch eine hohe zulässige elastische Verformung im Bereich der Abwinklung realisiert werden.

Um insbesondere die Dichtwirkung der Schutzabdeckung zu verbessern, weisen nach einem weiteren Ausführungsbeispiel die Lamellenelemente zumindest abschnittsweise im Bereich der jeweils am benachbarten Lamellenelement dieses übergreifend anliegenden Kante eine zumindest geringfügig aus der Lamellenebene abgewinkelte Gleitlippe auf.

Um auch bei einer beabsichtigten oder unbeabsichtigten elastischen Verformung der Metalllamellen eine ausreichende Dichtwirkung zwischen zwei hintereinander angeordneten benachbarten Lamellenelementen sicherzustellen kann nach einem Ausführungsbeispiel die das jeweils benachbarte Lamellenelement übergreifende und an diesem im wesentlichen anliegende Kante bereichsweise mit einer Mehrzahl von im wesentlichen quer zur Kante verlaufenden zur Kante hin offenen Schlitzen versehen sein. Vorzugsweise sind dabei die Schlitze in der Kante der Lasche des ersten Lamellenelementes zumindest im Bereich des abgewinkelten Bereichs angeordnet.

Nach einem weiteren besonders bevorzugten Ausführungsbeispiel sind die den auf den benachbarten Lamellenelementen gleitend zur Anlage gelangenden Kanten gegenüberliegenden Kanten der Lamellenelemente zumindest bereichsweise mit abgewinkelten Laschen, insbesondere in Form von Abkantungen, versehen, die die zugeordneten Kanten der Rahmenabschnitte übergreifen. Dabei können die Laschen als singuläre Laschen oder Gruppen von Laschen angeordnet und ausgebildet sein. Es ist jedoch ebenso denkbar, dass im wesentlichen die gesamte Kante abgewinkelt bzw. abgekantet ist und eine einzige Lasche bildet. Die Laschen dienen dabei im wesentlichen zur Anlage und Befestigung der Lamellenelemente an den zugeordneten Rahmenabschnitten.

In für sich bekannter Weise können die abgewinkelten Laschen mit Ausnehmungen zum Durchgriff mindestens eines Befestigungselementes, insbesondere nach Art einer Federklammer, versehen sein, mit denen die Lamellenelemente an den zugehörigen Rahmenabschnitten befestigbar sind.

Um insbesondere eine leichte Verformung bzw. Abwinklung der Lasche im Bereich der Abwinklung zwischen den beiden Rahmenabschnitten zu ermöglichen weisen die Kanten des ersten Lamellenelementes im Bereich der den abgewinkelten Bereich übergreifenden Laschen keine abgewinkelten Laschen auf.

Nach einem weiteren Ausführungsbeispiel der Erfindung ist der Bereich der Kante der Lasche des ersten Lamellenelementes, der das zweite Lamellenelement hintergreift, zumindest abschnittsweise mit einer die zugehörige Kante des zweiten Rahmenabschnitts übergreifenden abgewinkelten Lasche versehen ist. Dies bedeutet, dass das erste Lamellenelement, das nach Art eines Festlagers am ersten Rahmenabschnitt befestigt ist, mit seinem freien Ende, nämlich der den abgewinkelten Bereich übergreifenden Lasche, auch am zweiten Rahmenabschnitt gelagert ist, dort jedoch nur aufliegend nach Art eines Loslagers, das eine Bewegung der Lasche am zweiten Rahmenelement in Längsrichtung des zweiten Rahmenelementes erlaubt.

Im Folgenden wird die Erfindung von anhand lediglich ein Ausführungsbeispiel darstellenden Zeichnungen näher erläutert. Es zeigt
- **Fig. 1**: ein Ausführungsbeispiel eines ersten Lamellenelementes gemäß der Schutzabdeckung der vorliegenden Erfindung in perspektivischer schematischer Darstellung;
- **Fig. 2**: ein Ausführungsbeispiel eines zweiten Lamellenelementes gemäß der Schutzabdeckung der vorliegenden Erfindung in einer der Fig. 1 entsprechenden Ansicht;
- **Fig. 3**: in einer der Fig. 1 entsprechenden Ansicht das erste Lamellenelement in seiner Anordnung am zugeordneten Rahmenelement;
- **Fig.4**: in einer der Fig. 3 entsprechenden Ansicht die Anordnung beider Lamellenelemente am zugeordneten Rahmenelement; und
- **Fig. 5**: in schematischer Darstellung zwei hintereinander angeordnete Schutzabdeckungselemente gemäß den vorstehenden Figuren.

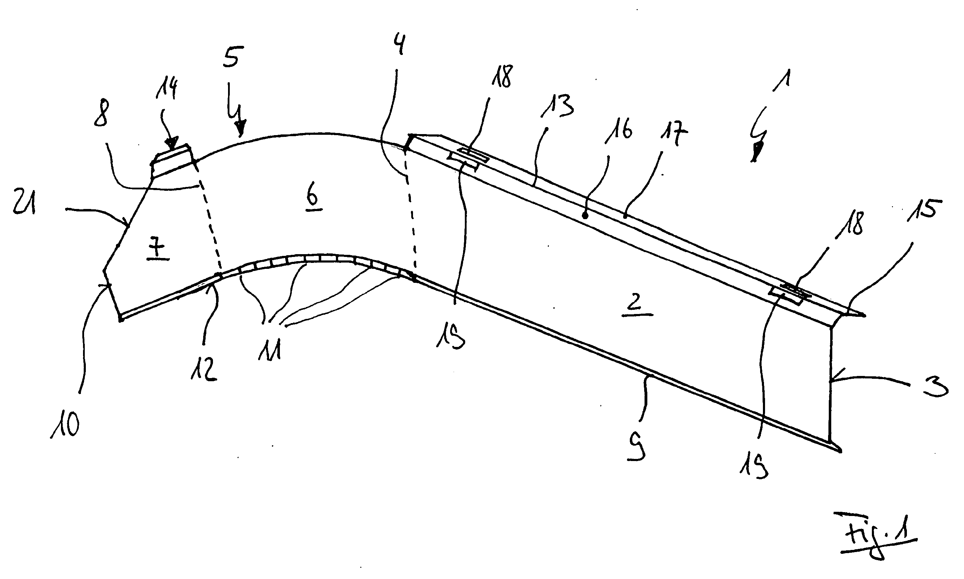

Das in Fig. 1 dargestellte erste Lamellenelement 1 besteht im wesentlichen aus einem ebenen Blechzuschnitt aus einem Federstahl. Das Lamellenelement weist einen ersten Bereich 2 auf, der als gerader Abschnitt ausgebildet ist. Dieser Bereich erstreckt sich im wesentlichen von der Stirnkante 3 des Lamellenelementes bis zur gestrichelten Linie 4. An diesen ersten Bereich ist eine Lasche 5 einstückig angeformt. Die Lasche weist dabei einen kurvenförmig gebogenen Bereich 6 und einen im wesentlichen geraden bzw. ebenen Bereich 7 auf. Der kurvenförmig gebogene Bereich erstreckt sich dabei im wesentlichen von der gestrichelten Linie 4 bis zur gestrichelten Linie 8.

Das Lamelleneleznent 1 weist an seiner unteren Kante einen aus der Blechebene nach hinten abgekanteten Bereich in Form einer Gleitlippe 9 auf. Dabei erstreckt sich diese Gleitlippe 9 über die gesamte Länge des Lamellenelementes 1 von der Stirnkante 3 bis zur Stirnkante 10. Im kurvenförmig gebogenen Bereich 6 ist die Gleitlippe 9 mit einer Vielzahl von zur Kante 12 hin offenen Schlitzen 11 versehen, die die Verformbarkeit bzw. Biegsamkeit des Bereichs 6 verbessern.

Im Bereich seiner der Kante 12 gegenüberliegenden Kante 13 ist das Lamellenelement 1 mit abgewinkelten Laschen 14 bzw. 15 versehen, die bei dem dargestellten Ausführungsbeispiel durch Abkantungen des Blechzuschnittes des Lamellenelementes gebildet werden. Die Laschen 14 und 15 weisen im Querschnitt ein gleiches im wesentlichen dreieckiges Profil auf und werden durch eine erste Abkantung 16 und eine zweite Abkantung 17 gebildet. Der kurvenförmig gebogene Bereich 6 weist keine abgewinkelt Lasche auf, um die bestimmungsgemäße Biegung zur Überdeckung des abgewinkelten Bereiches der Schutzabdeckung nicht zu behindern.

Die Lasche 15 des ersten Bereichs 2 weist Ausnehmungen 18 und 19 auf, die zum Durchgriff einer nicht dargestellten Federklammer zur Befestigung am zugeordneten Rahmenabschnitt bestimmt sind. Die Lasche 14 des Bereichs 7 weist hingegen keine derartigen Ausnehmungen auf.

Die Stirnkante 10 des Bereichs 7 weist eine Abschrägung 21 auf.

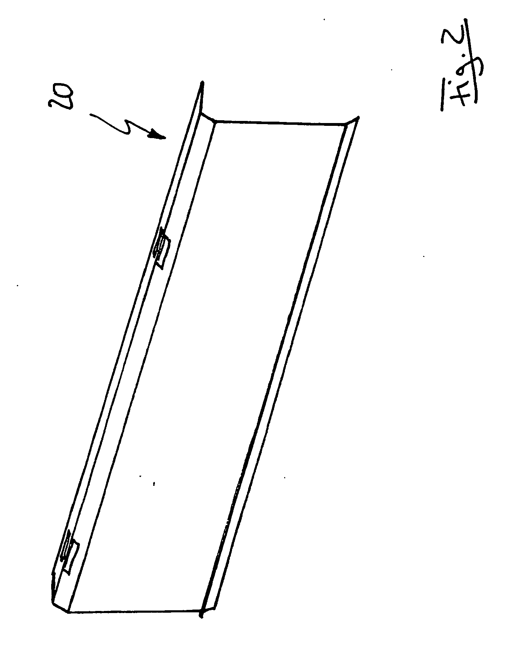

Das in Fig. 2 dargestellte zweite Lamellenelement 20 weist grundsätzlich den gleichen Aufbau wie der erste Bereich 2 des ersten Lamellenelementes 1 auf. Insbesondere entsprechen die Abkantungen und abgewinkelten Laschen in Form, Geometrie und Anordnung den entsprechenden Größen des ersten Lamellenelementes 1.

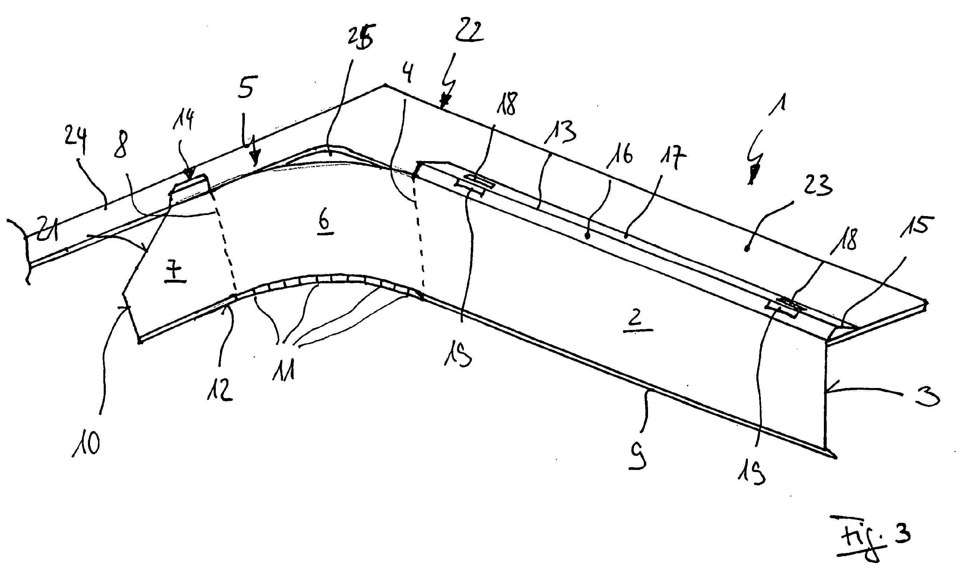

In Fig. 3 ist das erste Lamellenelement in seiner Anordnung an einem Rahmenelement 22 gezeigt. Das Rahmenelement 22 weist zwei Rahmenabschnitte 23 und 24 auf, wobei die beiden Rahmenabschnitte bei diesem Ausführungsbeispiel um etwa 90 Grad gegeneinander abgewinkelt sind. Wie aus dieser Darstellung weiter ersichtlich ist, ist das Lamellenelement am Rahmenelement 23 über nicht dargestellten Federklammern im Durchgriff durch die Ausnehmungen 18 und 19 im wesentlichen fest, das heißt unbeweglich in Längsrichtung des Bereiches 2, angeordnet. Der kurvig gekrümmte Bereich 6 überdeckt den Bereich der Abwinklung 25 des Rahmenelementes 22, wobei weiter der gerade Bereich 7 mit seiner abgewinkelten Lasche 14 am Rahmenabschnitt 24 zur Anlage gelangt. Im Gegensatz zur Befestigung am Rahmenabschnitt 23 erfolgt die Anordnung jedoch nicht fest, sondern zumindest in Längsrichtung des Rahmenabschnitts 24 verschieblich nach Art eines Loslagers. Dies bedeutet, dass sich bei Verformung des kurvig gebogenen Bereichs 6 der gerade Bereich 7 gegenüber dem Rahmenabschnitt 24 im wesentlichen frei bewegen kann.

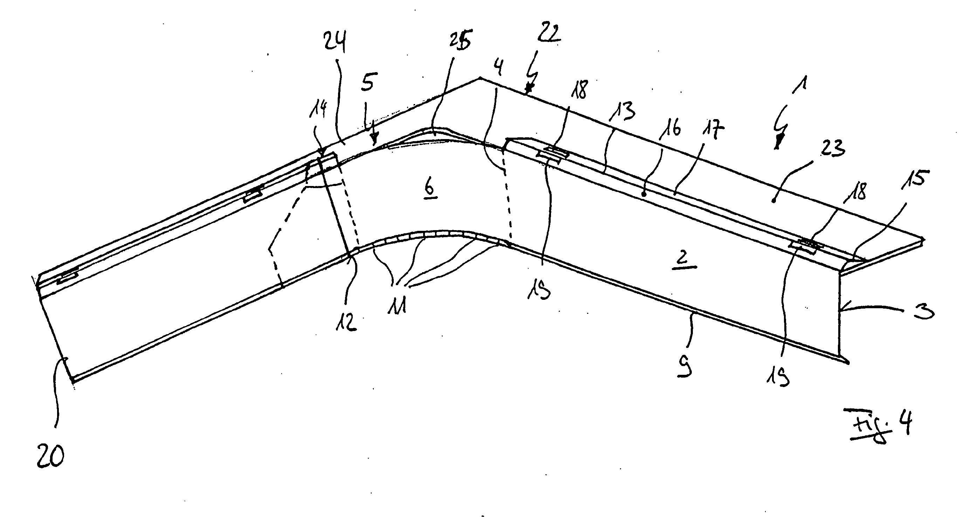

Wie insbesondere aus der Fig. 4 ersichtlich ist, ist das zweite Lamellenelement 20 am Rahmenabschnitt 24 des Rahmenelementes 22 angeordnet und dort in gleicher Weise wie das Lamellenelement 1 am Rahmenelement 23 mittels nicht dargestellten Federklammern befestigt. Die Lasche 5 des ersten Lamellenelementes hintergreift dabei mit seinem zungenartigen Bereich 7 das zweite Lamellenelement 20, wodurch sich insgesamt eine Abdeckung des gesamten Rahmenbereichs, insbesondere auch im Bereich der Abwinklung 25 ergibt.

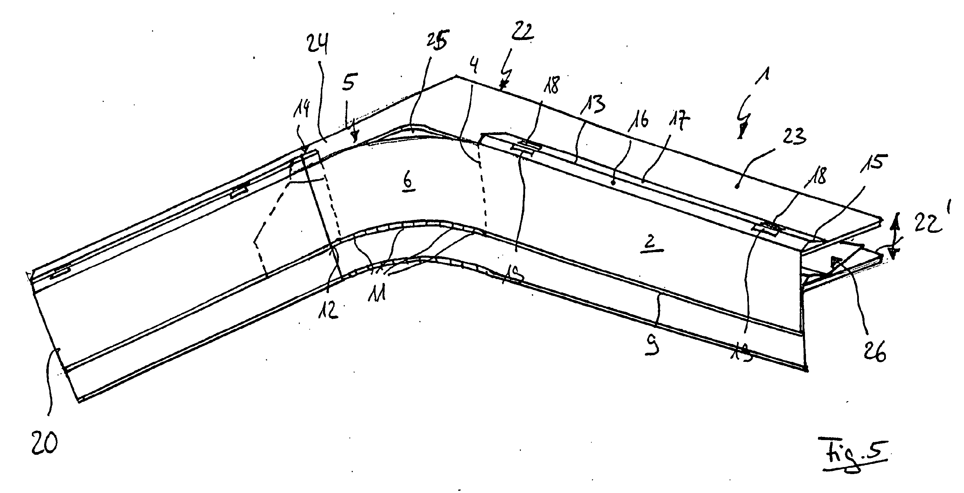

In Fig. 5 sind zwei im wesentlichen identische Schutzabdeckungselemente gemäß der vorliegenden Erfindung teleskopische einander übergreifend dargestellt, wobei durch eine Vielzahl derartig nacheinander angeordneter Schutzabdeckungselemente die erfindungsgemäße Schutzabdeckung gebildet wird. Jedes der beiden Schutzabdeckungselemente weist dabei ein separates Rahmenelement 22 bzw. 22' auf. Die beiden Rahmenelemente sind bei dem hier dargestellten Ausführungsbeispiel Stützrahmen eines lediglich schematisch dargestellten Faltenbalges 26. Der Faltenbalg 26 weist Faltenbalgabschnitte auf, die zwischen den Rahmenelemente 22 und 22' angeordnet sind und diese zugkraftübertagend verbinden.

Beim Auseinanderziehen des Faltenbalges erfolgt ein Auseinanderziehen der Schutzabdeckungselemente, wobei jeweils die ersten und zweiten Lamellenelemente aufeinander gleiten. In gleicher Weise erfolgt beim Zusammenschieben der Schutzabdeckung wiederum eine Gleitbewegung der jeweiligen Lamellenelemente aufeinander, wobei einen Mehrzahl von nacheinander angeordneten Lamellenelement unter Bildung eines Lamellenpaketes teleskopartig übereinander geschoben wird. Die Verformung der Lamellenabschnitte in diesem Bereich, die nach dem Stand der Technik zu einer Verklemmung des Schutzabdeckung führen würde, wird gemäß der Erfindung durch die freie Beweglichkeit der Lasche des ersten Lamellenelementes sowohl zum Rahmen als auch zum zweiten Lamellenelement diese Verformung ausgeglichen bzw. aufgenommen. Dadurch kann ein Verklemmen ausgeschlossen oder zumindest signifikant reduziert werden.

## Patentansprüche

1. Schutzabdeckung mit mindestens zwei in Bewegungsrichtung der Schutzabdeckung hintereinander angeordneten Schutzabdeckungselementen, die jeweils mindestens ein Rahmenelement (22, 22') aufweisen, das mit mindestens zwei gegeneinander abgewinkelten Rahmenabschnitten (23, 24) versehen ist, wobei an jedem Rahmenabschnitt mindestens ein Lamellenelement (1, 20) derart angeordnet ist, dass die Lamellenelemente unmittelbar hintereinander angeordneter Rahmenelemente (22') unter Bildung einer im wesentlich geschlossenen Abdeckung teleskopartig aufeinander gleitend einander übergreifen, und wobei jeder Rahmenabschnitt jedes Rahmenelementes mit einem separaten Lamellenelement versehen ist,
**dadurch gekennzeichnet,**
**dass** jeweils ein erstes Lamellenelement (1) an einem ersten Rahmenabschnitt (23) eine den abgewinkelten Bereich zum zweiten Rahmenabschnitt (24) des gleichen Rahmenelementes (22) übergreifende kurvenförmig gebogene Lasche (5) aufweist, wobei die Lasche ein zweites Lamellenelement (20) am zweiten Rahmenabschnitt derart hintergreift, dass die Lasche des ersten Lamellenelementes bei der Bewegung der Schutzabdeckung relativ zum zweiten Lamellenelement bewegbar ist.

2. Schutzabdeckung nach Anspruch 1,
**dadurch gekennzeichnet,**
**dass** die Rahmenelemente Stützrahmen eines Faltenbalges (26) sind, zwischen denen die gefalteten Bereiche des Faltenbalges angeordnet sind.

3. Schutzabdeckung nach Anspruch 2
**dadurch gekennzeichnet,**
**dass** der Faltenbalg einen im wesentlichen geschlossenen Balgkörper bildet.

4. Schutzabdeckung nach Anspruch 2,
**dadurch gekennzeichnet,**
**dass** der Faltenbalg zumindest bereichsweise mit Ausnehmungen und/oder Öffnungen versehen ist.

5. Schutzabdeckung nach Anspruch 1,
dass die Rahmenelemente durch zumindest zugkraftübertragene Verbindungselemente, insbesondere Zugbänder, Federelemente oder dergleichen miteinander verbunden sind.

6. Schutzabdeckung nach einem der Ansprüche 1 bis 5,
**dadurch gekennzeichnet,**
**dass** das erste und/oder das zweite Lamellenelement aus Kunststoff oder Metall, insbesondere aus Federstahl besteht.

7. Schutzabdeckung nach einem der Ansprüche 1 bis 6,
**dadurch gekennzeichnet,**
**dass** die Lamellenelemente zumindest abschnittsweise im Bereich der jeweils am benachbarten Lamellenelement dieses übergreifend anliegenden Kante eine zumindest geringfügig aus der Lamellenebene abgewinkelte Gleitlippe (9) aufweisen.

8. Schutzabdeckung nach einem der Ansprüche 1 bis 7,
**dadurch gekennzeichnet,**
**dass** die das jeweils benachbarte Lamellenelement übergreifende und an diesem im wesentlichen anliegende Kante bereichsweise mit einer Mehrzahl von im wesentlichen quer zur Kante (12) verlaufenden zur Kante hin offenen Schlitzen (11) versehen ist.

9. Schutzabdeckung nach Anspruch 8,
**dadurch gekennzeichnet,**
**dass** die Schlitze in der Kante der Lasche des ersten Lamellenelementes zumindest im Bereich des abgewinkelten Bereichs (6) angeordnet sind.

10. Schutzabdeckung nach einem der Ansprüche 1 bis 9,
**dadurch gekennzeichnet,**
**dass** die den auf den benachbarten Lamellenelementen gleitend zur Anlage gelangenden Kanten gegenüberliegenden Kanten (13) der Lamellenelemente zumindest bereichsweise mit abgewinkelten Laschen (14, 15), insbesondere in Form von Abkantungen (16, 17), versehen sind, die die zugeordneten Kanten der Rahmenabschnitte übergreifen.

11. Schutzabdeckung nach 10,
**dadurch gekennzeichnet,**
**dass** die abgewinkelten Laschen mit Ausnehmungen (18, 19) zum Durchgriff mindestens eines Befestigungselementes, insbesondere nach Art einer Federklammer, versehen sind, mit denen die Lamellenelemente an den zugehörigen Rahmenabschnitten befestigbar sind.

12. Schutzabdeckung nach Anspruch 10 oder 11,
**dadurch gekennzeichnet,**
**dass** die Kanten des ersten Lamellenelementes im Bereich (6) der den abgewinkelten Bereich übergreifenden Laschen keine abgewinkelten Laschen aufweisen.

13. Schutzabdeckung nach einem der Ansprüche 10 bis 12,
**dadurch gekennzeichnet,**
**dass** der Bereich (7) der Kante der Lasche des ersten Lamellenelementes, der das zweite Lamellenelement (20) hintergreift, zumindest abschnittsweise mit einer die zugehörige Kante des zweiten Rahmenabschnitts übergreifenden abgewinkelten Lasche (14) versehen ist.

## Claims

1. Protective cover comprising at least two protective cover elements arranged one after the other in the direction of movement of the protective cover, which respectively comprise at least one frame element (22, 22') which is provided with at least two frame sections (23, 24) which are offset with respect to one another, at least one strip element (1, 20) being arranged on each frame section such that the strip elements of frame elements (22') which are arranged directly one after the other overlap by sliding over one another in a telescopic manner to form a substantially closed cover and each frame section of each frame element being provided with a separate strip element,
**characterised in that**
respectively one first strip element (1) on a first frame section (23) comprises a curved tab (5) which overlaps the offset region to the second frame section (24) of the same frame element (22), the tab engaging behind a second strip element (20) on the second frame section such that the tab of the first strip element may be moved relative to the second strip element when the protective cover is moved.

2. Protective cover according to Claim 1,
**characterised in that**
the frame elements are supporting frames of a bellows (26), between which the folded regions of the bellows are arranged.

3. Protective cover according to Claim 2,
**characterised in that**
the bellows forms a substantially closed bellows body.

4. Protective cover according to Claim 2,
**characterised in that**
the bellows is at least in sections provided with recesses and/or openings.

5. Protective cover according to Claim 1,
**characterised in that**
the frame elements are interconnected by at least tensile force-transmitting connecting elements, in particular straps, spring elements, or the like.

6. Protective cover according to one of Claims 1 to 5,
**characterised in that**
the first and/or the second strip element consists of plastics or metal, in particular of spring steel.

7. Protective cover according to one of Claims 1 to 6,
**characterised in that**
the strip elements comprise a sliding lip (9) which is at least slightly offset from the strip plane, at least in sections in the region of the edge respectively abutting against the adjacent strip element and overlapping said element.

8. Protective cover according to one of Claims 1 to 7,
**characterised in that**
the edge which overlaps the respectively adjacent strip element and which substantially abuts thereagainst is provided in sections with a plurality of slits (11) which run substantially transversely to the edge (12) and which are open towards the edge.

9. Protective cover according to Claim 8,
**characterised in that**
the slits in the edge of the tab of the first strip element are arranged at least in the region (6) of the offset region.

10. Protective cover according to one of Claims 1 to 9,
**characterised in that**
the edges (13) of the strip elements situated opposite the edges which come slidingly to rest on the adjacent strip elements are provided, at least in sections, with offset tabs (14, 15) in particular in the form of bent edges (16, 17) which overlap the associated edges of the frame sections.

11. Protective cover according to Claim 10,
**characterised in that**
the offset tabs are provided with recesses (18, 19) for penetrating at least one fixing element, in particular in the manner of a spring clip, with which the strip elements may be fixed to the corresponding frame sections.

12. Protective cover according to Claim 10 or 11,
**characterised in that**
the edges of the first strip element have no offset tabs in the region (6) of the tabs overlapping the offset region.

13. Protective cover according to one of Claims 10 to 12,
**characterised in that**
the region (7) of the edge of the tab of the first strip element which engages behind the second strip element (20) is provided, at least in sections, with an offset tab (14) overlapping the corresponding edge of the second frame section.

## Revendications

1. Cache de protection avec au moins deux éléments de recouvrement disposés l'un derrière l'autre dans le sens de déplacement du cache de protection, comportant chacun au moins un élément de cadre (22, 22') pourvu d'au moins deux segments de cadre (23, 24) coudés l'un par rapport à l'autre, au moins un élément de lamelle (1, 20) étant disposé sur chacun des segments de cadre, de telle manière que les éléments de lamelle des éléments de cadre (22') disposés immédiatement l'un après l'autre s'engagent l'un par-dessus l'autre en coulissant l'un sur l'autre de façon télescopique et en formant un recouvrement essentiellement fermé, et chacun des segments de cadre de chaque élément de cadre étant pourvu d'un élément de lamelle séparé,
**caractérisé en ce que**
chaque premier élément de lamelle (1) sur un premier segment de cadre (23) comporte une attache (5) coudée en forme de courbe s'engageant par-dessus la région coudée par rapport au deuxième segment de cadre (24) du même élément de cadre (22), l'attache s'engageant derrière un deuxième élément de lamelle (20) sur le deuxième segment de cadre, de telle manière que l'attache du premier élément de lamelle peut être déplacée par rapport au deuxième élément de lamelle lors du mouvement du cache de protection.

2. Cache de protection selon la revendication 1,
**caractérisé en ce que**
les éléments de cadre sont des cadres de support d'un soufflet plissé (26), entre lesquels sont disposés les régions plissées du soufflet plissé.

3. Cache de protection selon la revendication 2,
**caractérisé en ce que**
le soufflet plissé forme un corps de soufflet essentiellement fermé.

4. Cache de protection selon la revendication 2,
**caractérisé en ce que**
le soufflet plissé est au moins par régions pourvu d'évidements et/ou d'ouvertures.

5. Cache de protection selon la revendication 1,
**caractérisé en ce que**
les éléments de cadre sont reliés entre eux par des éléments de liaison transmettant au moins une force de traction, notamment par des bandes de traction, des éléments de ressort ou similaires.

6. Cache de protection selon l'une des revendications 1 à 5,
**caractérisé en ce que**
le premier et/ou le deuxième élément de lamelle est constitué en métal, notamment en acier à ressorts.

7. Cache de protection selon l'une des revendications 1 à 6,
**caractérisé en ce que**
les éléments de lamelle comportent au moins par tronçons une lèvre de coulissement (9) au moins légèrement coudée à partir de la surface de lamelle, dans la région de l'arête respectivement adjacente à l'élément de lamelle voisin, laquelle s'engage par-dessus celui-ci.

8. Cache de protection selon l'une des revendications 1 à 7,
**caractérisé en ce que**
l'arête essentiellement adjacente à l'élément de lamelle voisin respectif et s'engageant par-dessus celui-ci est pourvue par régions d'une pluralité de fentes (11) ouvertes en direction de l'arête et s'étendant essentiellement en travers de l'arête (12).

9. Cache de protection selon la revendication 8,
**caractérisé en ce que**
les fentes dans l'arête de l'attache du premier élément de lamelle sont disposées au moins dans la zone de la région coudée (6).

10. Cache de protection selon l'une des revendications 1 à 9,
**caractérisé en ce que**
les arêtes (13) des éléments de lamelle qui sont situées en face des arêtes entrant de façon coulissante en contact avec les éléments de lamelle voisins sont au moins par régions pourvues d'attaches coudées (14, 15), notamment en forme de repliages (16, 17), qui s'engagent par-dessus les arêtes correspondantes des segments de cadre.

11. Cache de protection selon la revendication 10,
**caractérisé en ce que**
les attaches coudées sont pourvues d'évidements (18, 19) pour le passage d'au moins un élément de fixation, notamment du type d'un étrier à ressort, permettant de fixer les éléments de lamelle aux segments de cadre correspondants.

12. Cache de protection selon l'une des revendications 10 ou 11,
**caractérisé en ce que**
les arêtes du premier élément de lamelle ne comportent pas d'attaches coudées dans la région (6) des attaches s'engageant par-dessus la région coudée.

13. Cache de protection selon l'une des revendications 10 à 12,
**caractérisé en ce que**
la région (7) de l'arête de l'attache du premier élément de lamelle, qui s'engage derrière le deuxième élément de lamelle (20), est au moins par tronçons pourvu d'une attache (14) coudée s'engageant par-dessus l'arête correspondante du deuxième segment de cadre.
